# FASCICULE DE BREVET EUROPEEN

(11) **EP 0 930 213 B1**
(45) Date de publication et mention de la délivrance du brevet: **15.10.2003**
(21) Numéro de dépôt: 99400083.4
(22) Date de dépôt: 14.01.1999
(51) Int. Cl.: B62D 1/16

(54) **Dispositif de fixation sur colonne de direction de véhicule automobile**
Befestigungseinrichtung für eine Kraftfahrzeuglenksäule
Fixing device on a steering column of a motor vehicle

(30) Priorité: 16.01.1998 FR 9800415
(43) Date de publication de la demande: 21.07.1999
(73) Titulaire: SC2N, 78180 Montigny-le-Bretonneux (FR)
(72) Inventeur: Hallet, Michel, 14320 Clinchamps/Orne (FR)
(74) Mandataire: Texier, Christian

(56) Documents cités:
- EP-A- 0 152 311
- GB-A- 1 384 691

## Description

L'invention concerne les dispositifs de fixation pour colonne de direction de véhicule.

On connaît d'après le document EP-0 152 311-A2 un dispositif de fixation d'une platine de commande sur un haut d'une colonne de direction de véhicule automobile. Ce dispositif comporte un collier portant la platine et engagé coaxialement sur un tube de la colonne. Une clavette en coin prend appui contre le tube. Elle présente une rampe inclinée coopérant avec une rampe inclinée du collier. Le serrage d'une vis traversant le collier et la clavette produit par effet de coin le serrage du collier sur le tube. Toutefois, ce dispositif requiert l'utilisation d'un nombre relativement important de pièces, ce qui alourdit le montage sur chaîne.

Le document GB 1 384 691 dévoile un dispositif tel que décrit par le préambule de la revendication 1.

Un but de l'invention est de fournir un dispositif dont le montage soit facilité.

En vue de la réalisation de ce but, on prévoit selon l'invention un dispositif de fixation pour colonne de direction de véhicule tel que celui de la revendication 1.

Ainsi, on évite l'adjonction et le montage d'une clavette séparée. Le nombre de pièces du dispositif est réduit et son montage facilité. On réalise néanmoins une fixation robuste des deux éléments l'un à l'autre, cette fixation fournissant un positionnement angulaire relatif précis des éléments.

Avantageusement, les éléments présentent des reliefs respectifs adaptés à être serrés l'un contre l'autre, lors du serrage de l'organe de fixation, de façon à supprimer tout jeu entre les éléments.

Avantageusement, les rampes sont planes.

Avantageusement, les rampes sont parallèles à l'axe principal.

Avantageusement, sur chaque élément, la rampe est contiguë au conduit de fixation.

Avantageusement, l'un des conduits de fixation est adapté à supporter à lui seul l'organe de fixation.

Ainsi, l'organe de fixation peut être prémonté sur l'un des éléments avant l'installation du dispositif.

Avantageusement, l'un des éléments est adapté à entourer l'autre élément.

Avantageusement, l'un des éléments est adapté à entourer l'autre élément en formant à lui -seul une boucle fermée autour de l'autre élément.

Avantageusement, les deux éléments sont adaptés à présenter un jeu relatif suivant une direction radiale à l'axe principal lorsque l'un des éléments entoure l'autre élément.

Avantageusement, les conduits de fixation ont un axe non parallèle à l'axe principal.

Avantageusement, les conduits de fixation ont un axe non sécant avec l'axe principal.

Avantageusement, les deux éléments sont adaptés à être guidés relativement à coulissement, le dispositif comportant des moyens de clipsage pour immobiliser les deux éléments relativement à coulissement.

Ainsi, on réalise une première immobilisation relative des deux éléments permettant ensuite de facilement manoeuvrer un organe de fixation dans les conduits de fixation.

Avantageusement, l'un des éléments comporte une platine de support d'organes de commande.

D'autres caractéristiques et avantages de l'invention apparaîtront encore dans la description suivante d'un mode préféré de réalisation donné à titre d'exemple non limitatif. Aux dessins annexés :
- la figure 1 est une vue en coupe longitudinale suivant le plan I-I de la figure 2 d'un élément externe du dispositif de fixation de l'invention ;
- la figure 2 est une vue en coupe transversale suivant le plan II-II de l'élément externe de la figure 1 ;
- la figure 3 est une vue de côté de l'élément externe de la figure 2 vu suivant la direction III ;
- la figure 4 est une vue en coupe longitudinale suivant le plan IV-IV de la figure 5 d'un élément interne du dispositif de fixation de l'invention et d'une partie de la colonne de direction ;
- la figure 5 est une vue en coupe transversale suivant le plan V-V de la figure 4 ;
- la figure 6 est une vue de côté de l'élément interne et de la colonne de la figure 5 vus suivant la direction VI ;
- les figures 7, 8 et 9 sont des vues analogues aux figures 1, 2 et 3 montrant le dispositif de fixation assemblé sur la colonne ; et
- la figure 10 est une vue de la partie supérieure d'une colonne de direction comportant le dispositif de fixation selon l'invention.

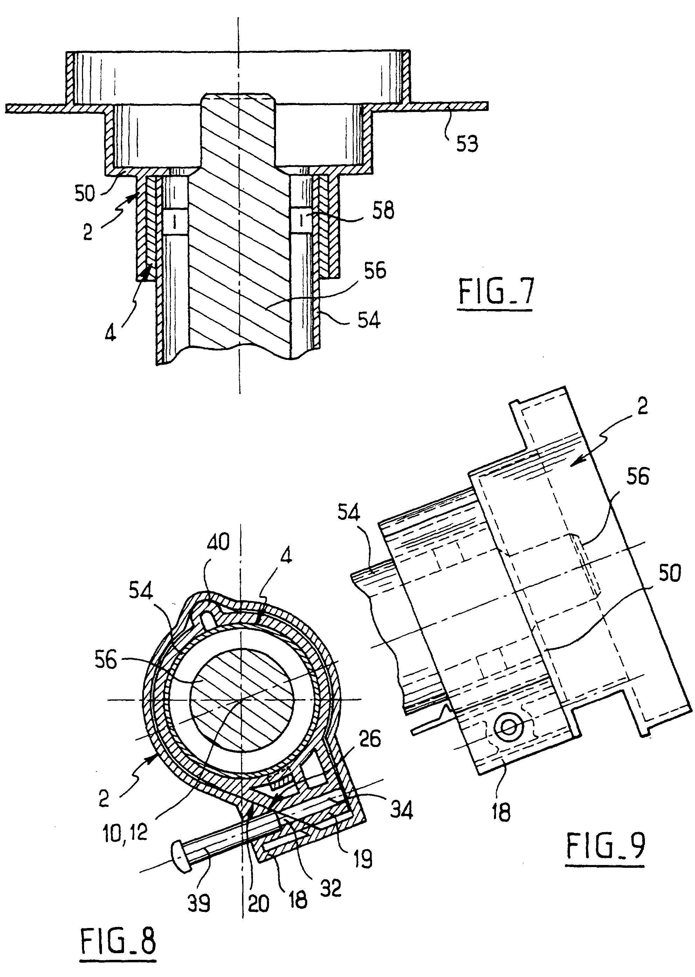

Le dispositif de fixation selon l'invention est destiné à une colonne de direction de véhicule automobile. Il comprend un élément externe 2 et un élément interne 4 comportant des parois cylindriques respectives 6, 8 d'axe respectif 10, 12. L'élément externe 2 est adapté à entourer l'élément interne 4 comme en figures 7 à 9 de sorte que les deux parois cylindriques 6, 8 sont mutuellement coaxiales et en regard l'une de l'autre. En particulier, une face interne cylindrique 14 de la paroi 6 de l'élément externe 2 est alors en regard d'une face externe cylindrique 16 de la paroi 8 de l'élément interne 4. La face interne 14 de l'élément externe a un rayon supérieur à un rayon de la face externe 16 de l'élément interne de sorte qu'un léger jeu radial est alors ménagé entre celles-ci.

La paroi cylindrique 8 de l'élément interne 4 définit intérieurement un conduit de support 55 adapté pour la réception dans l'élément interne d'un support du dispositif de fixation.

L'élément externe 2 et l'élément interne 4 comportent chacun un taquet 18, 19 s'étendant radialement à l'axe 10, 12 vers l'extérieur en saillie de la paroi cylindrique 6, 8 associée. Sur l'élément interne 4, le taquet 19 est délimité extérieurement par une face d'appui plane ou rampe 20 tangente à la face cylindrique 16, une face arrière 22 non parallèle à la face d'appui 20 et parallèle à l'axe 12, et une face latérale 24 joignant la face d'appui 20 et la face arrière 22 et opposée à la face cylindrique 16.

Sur l'élément externe 2, le taquet 18 est évidé de façon à recevoir intérieurement le taquet 19 de l'élément interne 4 lorsque celui-ci est reçu dans l'élément externe. Le taquet 18 présente ainsi trois faces internes de dimensions et de disposition homothétiques par rapport aux faces externes 20, 22, 24 du taquet 19 de l'élément interne. Ces trois faces internes sont une face d'appui ou rampe 26, une face arrière 28 et une face latérale 30 ayant les mêmes inclinaisons que leurs homologues du taquet interne 19. Ici encore les deux séries de trois faces sont dimensionnées de sorte que le taquet interne 19 peut être reçu avec jeu dans le taquet externe 18. Sur l'élément externe 2, la paroi cylindrique 6 est évidée en regard du taquet 18.

Les deux taquets 18, 19 présentent chacun un conduit cylindrique 32, 34. Le conduit interne 34 est lisse alors que le conduit externe 32 est taraudé. Sur le taquet interne 19, ce conduit 34 est distant de la paroi cylindrique 8. Les conduits 32, 34 s'étendent suivant une direction orthogonale aux axes longitudinaux 10, 12 respectifs, en particulier non sécante avec ces axes et non parallèle à ceux-ci. Sur le taquet interne 19, le conduit 34 traverse le taquet de part en part. Sur le taquet externe 18, le conduit 32 traverse de part en part une paroi avant 36 du taquet présentant la face interne d'appui 26. Les deux conduits sont adaptés à s'étendre en coïncidence et coaxialement lorsque le taquet interne 19 est reçu dans le taquet externe 18. Sur le taquet externe, la paroi avant 36 présente une face externe avant 38 parallèle à la face interne arrière 28. Le conduit 32 de la paroi avant 36 s'étend sur une longueur suffisante pour permettre le prémontage d'une vis 39 dans le conduit 32 du taquet externe 18 de sorte que le conduit supporte cette vis à lui seul comme en figure 8. Le conduit interne 32 est agencé de sorte que la vis 39 est reçue dans celui-ci avec un jeu radial important par rapport à un axe de la vis.

L'élément interne 4 comporte un bourrelet profilé 40 à profil en arc de cercle, s'étendant suivant une génératrice de la paroi cylindrique 8, en saillie de celle-ci. En l'espèce, le bourrelet 40 est diamétralement opposé au taquet interne 19 de part et d'autre de l'axe longitudinal 12.

L'élément externe 2 comporte une déformation locale profilée de sa paroi cylindrique 6, s'étendant suivant une génératrice de la paroi cylindrique et définissant sur la face interne 14 un creux profilé 42 diamétralement opposé au taquet externe 18 de part et d'autre de l'axe longitudinal 10. Ce creux 42 présente deux faces 44 sensiblement planes inclinées l'une par rapport à l'autre. Lorsque l'élément interne 4 est reçu dans l'élément externe 2, le bourrelet 40 est adapté à venir en appui contre l'une et/ou l'autre des deux faces 44 du creux, avec un léger jeu radial à l'axe 10, 12 commun des éléments. Dans cette position, l'élément externe 2 définit à lui seul une bague en boucle fermée autour de l'élément interne 4.

L'élément interne 4 présente deux bords plans d'extrémité 46 perpendiculaires à l'axe longitudinal 12 et parallèles entre eux. L'élément externe 2 présente un bord inférieur plan d'extrémité 48 perpendiculaire à l'axe longitudinal 10. L'élément externe 2 comporte une paroi supérieure plane d'appui 50 perpendiculaire à l'axe 10 et s'étendant en saillie intérieurement et extérieurement par rapport à la paroi cylindrique 6. Cette paroi 50 présente un orifice central 52. L'élément externe 2 porte une platine plane 53 parallèle à la paroi d'appui 50 et s'étendant vers l'extérieur en direction opposée à l'axe longitudinal 10.

L'élément externe et l'élément interne sont chacun d'un seul tenant.

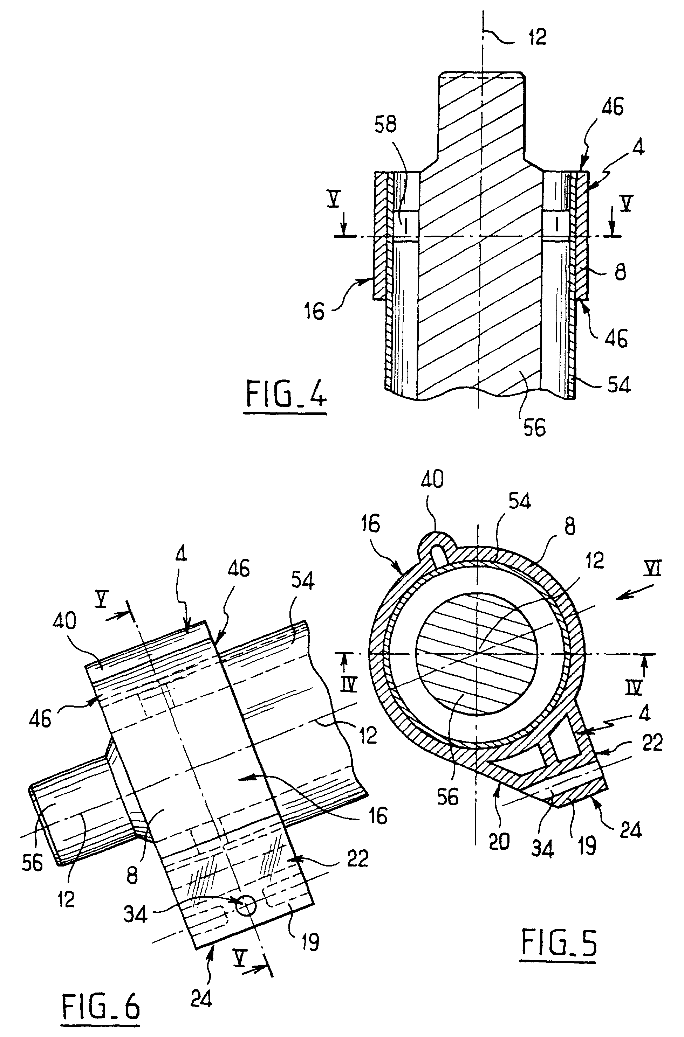

Pour assembler ce dispositif, on fixe l'élément interne 4, par exemple à force, sur une extrémité axiale supérieure d'un tube 54 de colonne de direction en enfilant le tube 54 dans le conduit de support 55 de l'élément interne 4, le bord supérieur 46 de l'élément interne 4 étant coplanaire avec un bord supérieur de ce tube, comme le montre la figure 4. De façon classique, la colonne de direction comporte un arbre 56 coaxial au tube 54, et s'étendant dans celui-ci avec interposition entre eux de plusieurs roulements tels que le roulement 58. On engage ensuite l'extrémité inférieure de l'élément externe 2 sur l'élément interne 4, coaxialement, pour faire coulisser les deux éléments 2, 4 relativement suivant leur axe longitudinal commun jusqu'à mettre la paroi d'appui 50 en butée contre les - bords supérieurs de l'élément interne 4 et du tube de colonne 54. La forme dissymétrique des taquets 18, 19 entraîne qu'une seule position relative de montage est possible pour les deux éléments. Les taquets produisent ainsi un effet de détrompage.

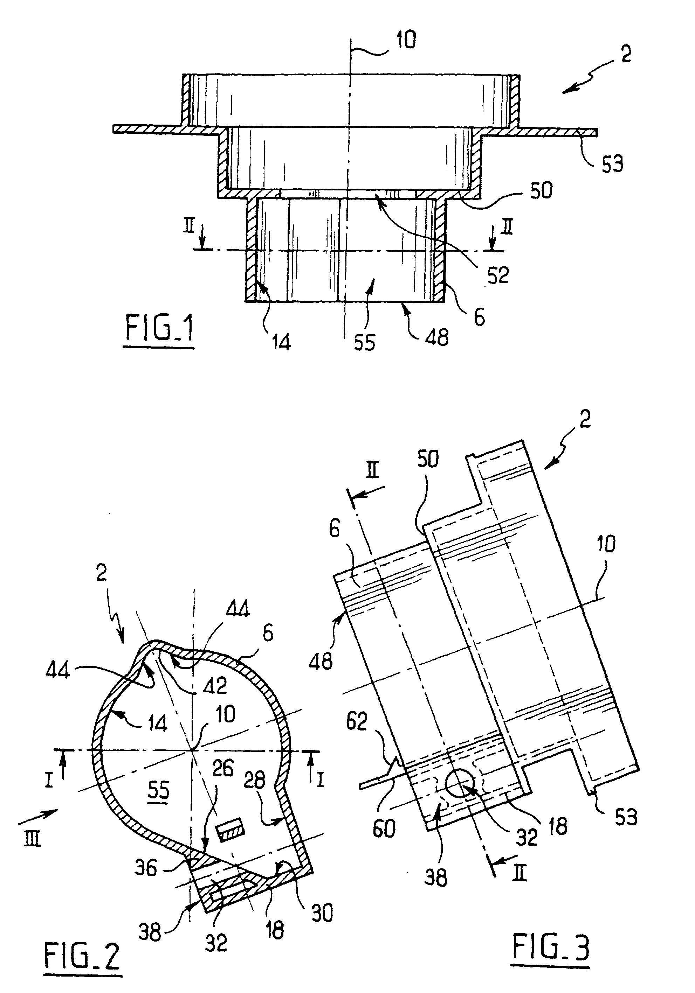

En référence aux figures 2, 3 et 9, l'élément externe 2 comporte un bras allongé rectiligne 60 parallèle à l'axe longitudinal 10 et décalé latéralement par rapport à celui-ci. Une extrémité supérieure du bras est fixée à la paroi d'appui 50, et une extrémité inférieure du bras porte un ergot 62 agencé de sorte que, dans la position relative d'assemblage précitée des deux éléments, l'ergot vient en prise avec le bord inférieur 46 de l'élément interne. Ainsi, l'ergot 62 immobilise les deux éléments à coulissement suivant l'axe 10, 12.

On engage ensuite la vis 39, déjà supportée dans le conduit externe 32, dans le conduit interne 34. La vis est une vis autotaraudeuse qui creuse son filet dans le conduit interne au fur et à mesure qu'elle pénètre dans celui-ci. Lors du serrage de la vis 39, les faces d'appui 20, 26 des taquets externe et interne viennent en appui l'une contre l'autre puis glissent l'une contre l'autre. Le dispositif est agencé de telle façon que cette manoeuvre a pour effet de déplacer les deux éléments relativement de sorte que le taquet de l'élément externe s'éloigne de l'axe 10 alors que le taquet de l'élément interne s'en rapproche en poussant radialement le relief 40 dans le creux 42 en appui contre les deux faces 44 de celui-ci. Les deux éléments 2, 4 sont alors immobilisés l'un par rapport à l'autre sans aucun jeu d'aucune sorte entre eux.

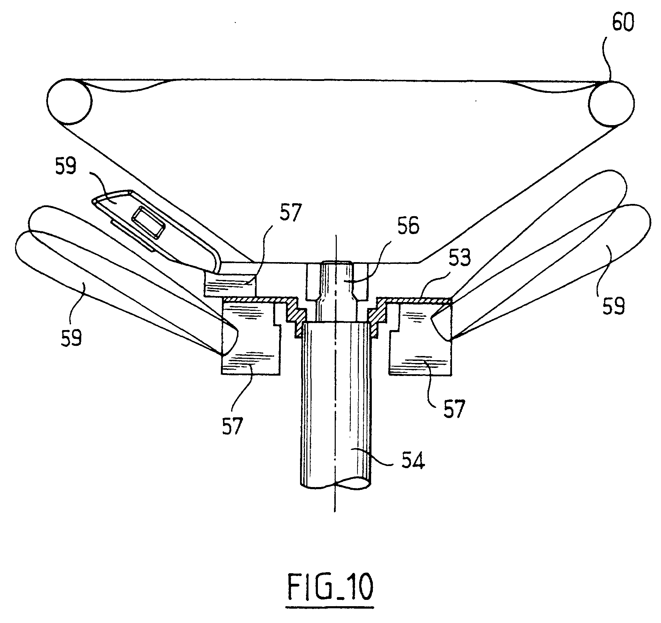

En référence à la figure 10, la platine 53 peut recevoir des contacteurs de commande 57 et des manettes 59 ou autres organes de commande reliés et connectés à ceux-ci au voisinage du volant 60 monté en haut de la colonne.

Le dispositif de l'invention permet d'obtenir facilement un positionnement angulaire précis des deux éléments relativement, et à terme, de la platine 53 par rapport au volant 60, le moindre défaut de positionnement angulaire entre ceux-ci nuisant a contrario à l'esthétique du poste de commande.

Bien entendu, on pourra apporter à l'invention de nombreuses modifications sans sortir du cadre des revendications.

L'élément interne 4 pourra servir de support direct pour le roulement 58. Il pourra être un élément de support antivol. Il pourra être intégré d'une seule pièce avec le tube de colonne 54. Il pourra être en alliage léger, en aluminium, ou en magnésium voire en matière plastique. Il pourra être fixé au tube 54 par sertissage. Les deux conduits de fixation pourront être lisses et associés à une vis autotaraudeuse. Alternativement, le conduit externe 32 pourra être lisse et le conduit interne 34 taraudé. Le conduit présentant un jeu radial avec la vis pourra être le conduit interne. Le déplacement relatif des deux éléments pourra se faire sans jeu, s'ils sont adaptés à se déformer.

## Revendications

1. Dispositif de fixation pour colonne de direction de véhicule, comportant deux éléments (2, 4) adaptés à être disposés en ayant un axe principal commun (10, 12), l'un (2) des éléments présentant un premier conduit de fixation (32) et une première rampe (26), le dispositif présentant un deuxième conduit de fixation (34) et une deuxième rampe (20) adaptée à coopérer avec la première rampe (26) de sorte qu'un serrage d'un organe de fixation (39) dans les conduits de fixation (32, 34) déplace les éléments (2, 4) relativement suivant une direction radiale à l'axe principal (10, 12), **caractérisé en ce que** les conduits de fixation (32, 34) étant non coaxiaux avec l'axe principal (10, 12), et **en ce que** l'autre élément (4) présente le deuxième conduit de fixation (34) et la deuxième rampe (20).

2. Dispositif selon la revendication 1, **caractérisé en ce que** les éléments (2, 4) présentent des reliefs respectifs (40, 42) adaptés à être serrés l'un contre l'autre, lors du serrage de l'organe de fixation (39), de façon à supprimer tout jeu entre les éléments (2, 4).

3. Dispositif selon la revendication 1 ou 2, **caractérisé en ce que** les rampes (26, 20) sont planes.

4. Dispositif selon la revendication 3, **caractérisé en ce que** les rampes (26, 20) sont parallèles à l'axe principal (10, 12).

5. Dispositif selon l'une quelconque des revendications 1 à 4, **caractérisé en ce que**, sur chaque élément, la rampe (26, 20) est contiguë au conduit de fixation (32, 34).

6. Dispositif selon l'une quelconque des revendications 1 à 5, **caractérisé en ce que** l'un (32) des conduits de fixation est adapté à supporter à lui seul l'organe de fixation (39).

7. Dispositif selon l'une quelconque des revendications 1 à 6, **caractérisé en ce que** l'un (2) des éléments est adapté à entourer l'autre élément (4).

8. Dispositif selon la revendication 7, **caractérisé en ce que** l'un (2) des éléments est adapté à entourer l'autre élément (4) en formant à lui seul une boucle fermée autour de l'autre élément.

9. Dispositif selon l'une des revendications 7 ou 8, **caractérisé en ce que** les deux éléments (2, 4) sont adaptés à présenter un jeu relatif suivant une direction radiale à l'axe principal (10, 12) lorsque l'un (2) des éléments entoure l'autre élément (4).

10. Dispositif selon l'une quelconque des revendications 1 à 9, **caractérisé en ce que** les conduits de fixation (32, 34) ont un axe non parallèle à l'axe principal (10, 12).

11. Dispositif selon l'une quelconque des revendications 1 à 10, **caractérisé en ce que** les conduits de fixation (32, 34) ont un axe non sécant avec l'axe principal (10, 12).

12. Dispositif selon l'une quelconque des revendications 1 à 11, **caractérisé en ce que** les deux éléments (2, 4) sont adaptés à être guidés relativement à coulissement, le dispositif comportant des moyens de clipsage (60, 46) pour immobiliser les deux éléments relativement à coulissement.

13. Dispositif selon l'une quelconque des revendications 1 à 12, **caractérisé en ce que** l'un (2) des éléments comporte une platine de support (53) d'organes de commande (57, 59).

## Patentansprüche

1. Befestigungsvorrichtung für eine Fahrzeuglenksäule, welche zwei Elemente (2, 4) umfaßt, die so eingerichtet sind, daß sie eine gemeinsame Hauptachse (10, 12) haben, wobei das eine Element (2) eine erste Befestigungsröhre (32) und eine erste Rampe (26) aufweist und die Vorrichtung eine zweite Befestigungsröhre (34) und eine zweite Rampe (20) aufweist, die dazu eingerichtet ist, mit der ersten Rampe (26) derart zusammenzuwirken, daß ein Eindrücken eines Befestigungsteils (39) in die Befestigungsröhren (32, 34) die Elemente (2, 4) entlang einer zur Hauptachse radialen Richtung (10, 12) relativ bewegt, **dadurch gekennzeichnet, daß** die Befestigungsröhren (32, 34) nicht koaxial mit der Hauptachse (10, 12) sind, und dadurch, daß das andere Element (4) die zweite Befestigungsröhre (34) und die zweite Rampe (20) aufweist.

2. Vorrichtung nach Anspruch 1, **dadurch gekennzeichnet, daß** die Elemente (2, 4) sich entsprechende Formen aufweisen (40, 42), die so eingerichtet sind, daß sie von dem Befestigungsteil (39) derart gegeneinander geklemmt werden, daß kein Spiel zwischen den Elementen (2, 4) besteht.

3. Vorrichtung nach einem der Ansprüche 1 oder 2, **dadurch gekennzeichnet, daß** die Rampen (26, 20) eben sind.

4. Vorrichtung nach Anspruch 3, **dadurch gekennzeichnet, daß** die Rampen (26, 20) parallel zur Hauptachse (10, 12) sind.

5. Vorrichtung nach einem der Ansprüche 1 bis 4, **dadurch gekennzeichnet, daß** auf jedem Element die Rampe (26, 20) an die Befestigungsröhre (32, 34) grenzt.

6. Vorrichtung nach einem der Ansprüche 1 bis 5, **dadurch gekennzeichnet, daß** die eine Befestigungsröhren (32) dazu eingerichtet ist, das Befestigungsteil (39) selbständig zu stützen.

7. Vorrichtung nach einem der Ansprüche 1 bis 6, **dadurch gekennzeichnet, daß** das eine Element (2) dazu eingerichtet ist, das andere Element (4) zu umgeben.

8. Vorrichtung nach Anspruch 7, **dadurch gekennzeichnet, daß** das eine Element (2) dazu eingerichtet ist, das andere Element (4) zu umgeben, wobei es selbst einen geschlossenen Ring um das andere Element bildet.

9. Vorrichtung nach einem der Ansprüche 7 oder 8, **dadurch gekennzeichnet, daß** die beiden Elemente (2, 4) derart eingerichtet sind, daß sie ein Relativspiel entlang einer zur Hauptachse (10, 12) radialen Richtung aufweisen, wenn das eine Element (2) das andere Element (4) umgibt.

10. Vorrichtung nach einem der Ansprüche 1 bis 9, **dadurch gekennzeichnet, daß** die Befestigungsröhren (32, 34) eine zur Hauptachse (10, 12) parallele Achse haben.

11. Verfahren nach einem der Ansprüche 1 bis 10, **dadurch gekennzeichnet, daß** die Achse der Befestigungsröhren (32, 34) die Hauptachse (10, 12) nicht schneidet.

12. Vorrichtung nach einem der Ansprüche 1 bis 11, **dadurch gekennzeichnet, daß** die zwei Elemente (2, 4) so eingerichtet sind, daß sie relativ gleitend geführt sind, und die Vorrichtung Klemmungsmittel (60, 46) zum Relativfixieren der beiden Elemente gegen Gleiten umfaßt.

13. Vorrichtung nach einem der Ansprüche 1 bis 12, **dadurch gekennzeichnet, daß** das eine Element (2) eine Unterstützungsplatte (53) der Steuerteile (57, 59) umfaßt.

## Claims

1. Fixing device for a vehicle steering column, comprising two elements (2, 4) able to be arranged with a common main axis (10, 12), one (2) of the elements having a first fixing duct (32) and a first ramp (26), the device having a second fixing duct (34) and a second ramp (20) designed to collaborate with the first ramp (26) so that tightening of a fixing member (39) into the fixing ducts (32, 34) moves the elements (2, 4) relative to one another in a direction radial to the main axis (10, 12), **characterized in that** the fixing ducts (32, 34) are not coaxial with the main axis (10, 12) and **in that** the other element (4) exhibits the second fixing duct (34) and the second ramp (20).

2. Device according to Claim 1, **characterized in that** the elements (2, 4) have respective reliefs (40, 42) designed to be clamped against each other when the fixing member (39) is tightened, so as to eliminate any play between the elements (2, 4).

3. Device according to Claim 1 or 2, **characterized in that** the ramps (26, 20) are flat.

4. Device according to Claim 3, **characterized in that** the ramps (26, 20) are parallel to the main axis (10, 12).

5. Device according to any one of Claims 1 to 4, **characterized in that**, on each element, the ramp (26, 20) is contiguous with the fixing duct (32, 34).

6. Device according to any one of Claims 1 to 5, **characterized in that** one (32) of the fixing ducts is designed to be the sole support for the fixing member (39).

7. Device according to any one of Claims 1 to 6, **characterized in that** one (2) of the elements is designed to surround the other element (4).

8. Device according to Claim 7, **characterized in that** one (2) of the elements is designed to surround the other element (4) alone forming a closed loop around the other element.

9. Device according to either of Claims 7 and 8, **characterized in that** the two elements (2, 4) are designed to have a relative clearance in a direction radial to the main axis (10, 12) when one (2) of the elements is surrounding the other element (4).

10. Device according to any one of Claims 1 to 9, **characterized in that** the fixing ducts (32, 34) have an axis that is not parallel to the main axis (10, 12).

11. Device according to any one of Claims 1 to 10, **characterized in that** the fixing ducts (32, 34) have an axis that is not secant with the main axis (10, 12).

12. Device according to any one of Claims 1 to 11, **characterized in that** the two elements (2, 4) are designed to be guided relatively in sliding, the device comprising clipping means (60, 46) for immobilizing the two elements relatively in sliding.

13. Device according to any one of Claims 1 to 12, **characterized in that** one (2) of the elements comprises a mounting plate (53) supporting control members (57, 59).
